# EUROPEAN PATENT SPECIFICATION

(11) **EP 0 452 570 B1**
(45) Date of publication and mention of the grant of the patent: **28.12.1994**
(21) Application number: 90200969.5
(22) Date of filing: 19.04.1990
(51) Int. Cl.: H04N 1/00, H04N 1/21

(54) **Processing and digitizing apparatus for medical radiographic film**
Entwicklungs- und Digitalisiermaschine für medizinischen Röntgenfilm
Développeuse et numériseur pour films radiographiques médicaux

(43) Date of publication of application: 23.10.1991
(73) Proprietor: AGFA-GEVAERT naamloze vennootschap, 2640 Mortsel (BE)
(72) Inventor: Primo, Henri August, B-9080 Lochristi (BE); Müller Jürgen,, W-8 München 90 (DE)

(56) References cited:
- EP-A- 0 125 877
- EP-A- 0 251 237
- EP-A- 0 277 493
- US-A- 4 306 290
- US-A- 4 768 099
- POLYTECHNISCH TIJDSCHRIFT, vol. 15, no. 26, 21st December 1960, page 1236A, Rijswijk, NL; W. TEBRA: "Photoscan, een facsimilesysteem"
- IEE JOURNAL OF ELECTRONIC ENGINEERING, June 1979, pages 44-46, Tokyo, JP; K.MATSUSHIMA: "CCD image sensors achieve practical results"
- ELEKTROMEDICA, vol. 52, no. 1, 1984, pages 2-12, Erlangen, DE; M. PFEILER et al.: "Die digitale Bildtechnik in der konventionellen Röntgendiagnostik: Bestandsaufnahme und Ausblick"

## Description

The present invention relates to an apparatus for processing and digitizing photographic film in one pass. In particular the invention relates to an apparatus for processing and digitizing medical X-ray film.

The use of X-rays in medical diagnosis presently is widespread; according to conventional techniques, an image is recorded by a radiographic film, squeezed between intensifying screens in a cassette. After exposure, the radiographic film is taken out of the cassette in a darkroom or the cassette is loaded in full daylight in a film handling and processing equipment such as the apparatus marketed by the applicant company under the trade name Curix Capacity, and the film is then processed in a photographic processor to yield the final radiographic image suited for medical diagnostic purposes.

Particulars of the overall radiographic process may be found in 'Medical X-Ray Technique, principles and applications' by G.J. Van der Plaats, Philips' Technical Library, 1959, 'Radiographic Processing in Medicine and industry' by D.H.O. John, The Focal Press, 1967, 'The Fundamentals of Radiography', publication by the Health Sciences Markets Division, Eastman Kodak Company, 1980, or numerous other publications in the field.

The conventional way of producing a radiographic image on film offers however some disadvantages, in particular in respect of archival and retrieval of these images.

During recent years, various manufacturers of radiographic and photographic equipment have offered apparatus suitable for the digitization of photographic images. Indeed, once the radiographic image is available in digitized form, such document may be archived, retrieved and processed in any of the various ways offered by digital image processing apparatus : e.g. it may be transmitted over telephone lines for real-time, on-line conferencing. Generally speaking, radiographic images in digital form can be handled in a PAC(T)S-system being a 'Picture Archiving and Communication (or Transmission) System'.

Numerous radiological examining procedures already directly yield images suitable for diagnostic evaluation in digital form. Examples include digital subtraction, angiography, magnetic resonance, digital image radiography using stimulable phosphor plates and computer tomography.

In US-A-4,768,099 an example of digital image radiography using stimulable phosphor plates is disclosed. The images recorded in a stimulable phosphor plate is scanned and digitized. Via a digital image processing apparatus the processed image data are sent to a printer to provide a hard copy image and to a digital storage medium (viz. an optical disk).

A general overview of e.g. the digital image radiographic system is set forth in the article from Minoru Gonoda et al, in "Radiology", September 1983, p. 833 "Computed Radiography utilizing Scanning Laser Stimulated Luminescence".

A general overview of possible means and methods for digital image gathering, storing in digital memories or storing the images as hard-copies of the digital data is provided in ELECTROMEDICA, vol. 52, no 1, 1984 pages 2-12, Erlangen, DE; M. Pfeiler et al. "Die digitale Bildtechnik in der Röntgendiagnostiek : Bestandaufname und Ausblick".

In view of the above, it results that, in particular as long as the direct digital radiographic techniques such as computed radiography, remain expensive, the need to digitize radiographic films which are produced in a conventional way, constantly increases : in such way the conventionally produced films can be entered into the digital image processing environment.

Now the present way of working for the digitization of conventionally produced films is as follows : the exposed and processed radiographic films are retrieved out of the archives, then they are placed on a film digitizing apparatus, the operating conditions of which are adjusted to take into account the particulars of the radiograph, such as format, desired resolution etc. and after digitization the digitized image is sent to a host computer by the digitizer, and the radiographic film is set again in the archives.

In POLYTECHNISCH TIJDSCHRIFT, vol. 15, no 26 December 21. 1960 page 1236A, Rijswijk, NL; W. TEBRA 'Photoscan, een facsimilesysteem' a method for off-line converting images in to an electric signal is described. An exposed film is developed and fixed and then stored into a "temporary storage drum". From this drum the film can be transported after a few seconds or later on a appropriate moment, to a scanning system that converts the images into an electrical analog signal. The state of the out known from this document forms the precharacterizing portion of independent claims 1 and 6.

Apparatus particularly dedicated for the digitization of radiographic images are commercially available under the trade names 'TRUSCAN' from Truvel Corp., 8943 Fullbright Avenue, Chatsworth, CA 91311, USA, ′300A Computing Densitometer' from Molecular Dynamics, 240 Santa Ana Court, Sunnyvale, California 94086, USA, 'Laser Scanner KFDR-S' from Konica Corp., Medical Products Marketing Division, Shinjuku Nomura Building No. 26-2, Nishishinjuku 1-chome, Shinjuku-ku, Tokyo 163, Japan, e.a.

An example of off-line digitizing of radiographs of the thorax an performing an image processing on the digital image information to enhance the diagnostic quality of the image is disclosed in US-A-4,306.290. This document discloses also printing means to produce a hard copy of the digitally processed information.

It is clear however that the above working method represents a cumbersome and significantly labour-intensive procedure.

There consequently is a need for working methods and dedicated apparatus for the easy, convenient and fully automated digitizing of radiographs.

It is an object of the present invention to provide such apparatus.

According to the present invention, there now is provided an apparatus comprising means for processing exposed photographic film, and means for digitizing the processed photographic film.

Said apparatus further may comprise a driving mechanism catching the film and guiding said film at constant speed throughout the entire apparatus.
One way of carrying out the invention is described in detail below with reference to the drawings which illustrate a specific embodiment.

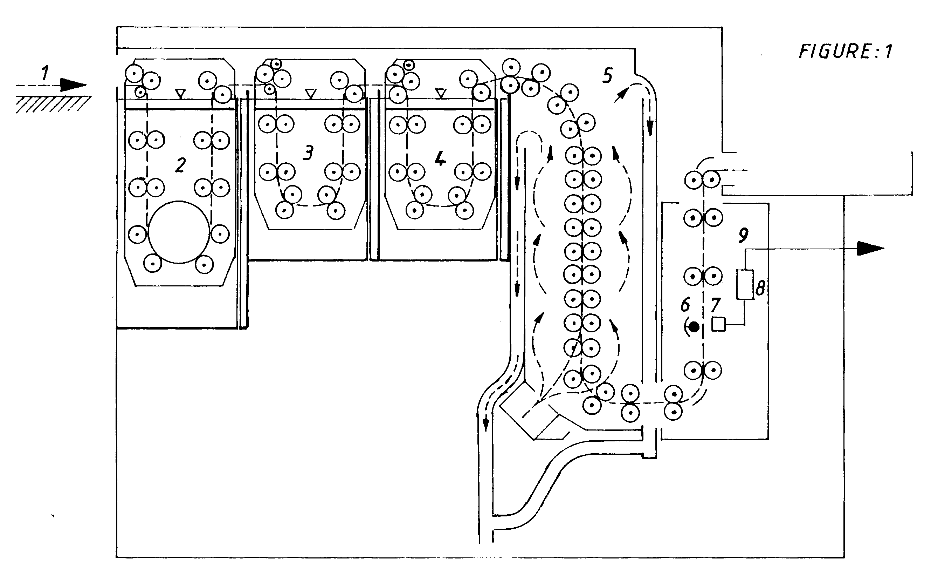

Figure 1 illustrates a functional diagram of the apparatus according to the invention.

As may be seen in this figure, the processing part of the apparatus of our invention comprises the following parts :
- X-ray film Feed (1)
- Developer tank (2)
- Fixer tank (3)
- Water tank (4)
- Heater and blower for drying the X-ray film (5)

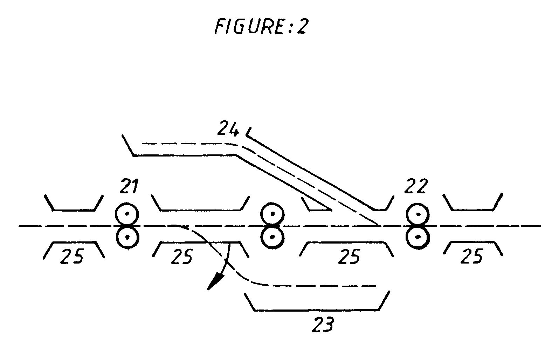

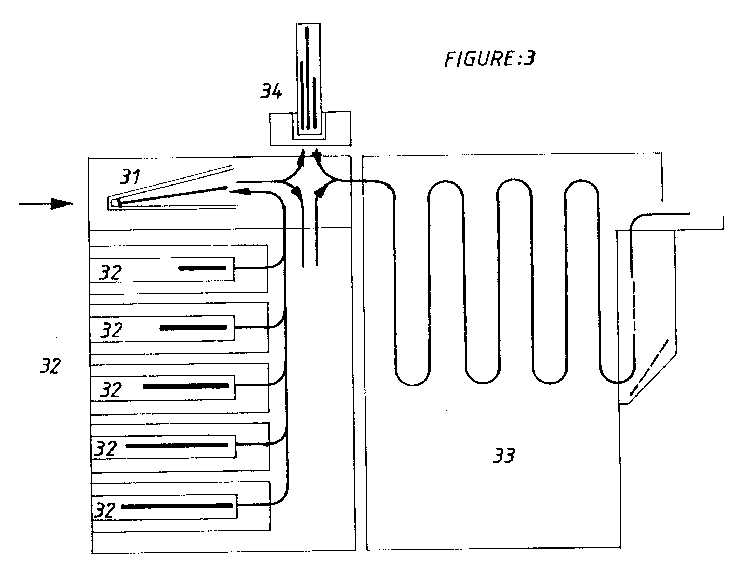

The drive mechanism picking-up the exposed photographic film at the entrance of the processing part of the apparatus of our invention, causing said film to be transported through the various sections of said part, further causing the processed photographic image to be further transported through the scanning-digitizing section of the apparatus to the exit of said apparatus comprises various pairs of rollers as illustrated in figures 2 and 3, all of which over various spindles are actuated by a motor.

In one particular embodiment of the apparatus of our invention such as described hereinafter, the processing part of said apparatus is based upon the photographic processor marketed by the applicant company under the trade mark CURIX 402. The transport speed of the film through the apparatus is set at 141 cm/sec, thus resulting in a processing time - dry to dry - for the radiographic film of 90 seconds.

Processing speeds between 140 and 180 cm/min are typical for upper capacity processors whereas speeds of 40 to 140 cm/min are typical for medium capacity processors and speeds between 30-40 cm/min for low capacity processors.

The scanning-digitizing part of the apparatus according to the invention comprises the following means as illustrated in figure 1 :
- means for projecting scanning radiation towards the processed photographic film, (6)
- means for sensing image-wise modulated scanning radiation, (7)
- means for converting the image-wise modulated radiation into a digitized signal, (8)
- a digital signal storage (9) device to which said convertor means is connected and which is adapted to be connected to a signal processor (host-computer) and which may serve as a buffer memory between the scanner and said processor.

The scanning of the processed film may be effected line-wise or can be performed in such a way that all pixels in each scanning line are irradiated simultaneously or one after another, e.g. using a laser beam. The former scanning method however is preferred for the implementation of the present invention. For simultaneously irradiating the pixels of one line a plurality of radiation extending over the total width of the image to be scanned is required. The image-wise modulated radiation quanta can be directed by a set of mirrors and focused by a lens onto radiation sensitive sensors. As radiation source may be used one or more broad-spectrum fluorescent lamps, such as those used in the scanners marketed by Truvel Corporation, cited supra.

As radiation-sensitive sensors may be used e.g. metal oxide semiconductors (MOSs), photodiodes, phototransistors, charge coupled devices (CCDs) or a photomultiplier. The use of CCDs as light sensors is preferred, e.g. for scan areas not to exceed 12x17 inches, an array of 3600 cells x 1 cell is preferably used.

So as to obtain a high resolution digitized image, the sensor senses the light level of each picture element, this detected analog signal is then processed and binarised by a conventional analog/digital converting means. Preferably the light intensity of each pixel image is converted into the precise level of gray withing an overall 256 gray-level scale. Translation of the gray level of the radiograph in line art or in 4 or 16 gray scale levels is in principle also possible but results in a bitmap of substantially lower resolution, which is not preferred for the application of the present invention.

So as the processed photographic film is passed between the radiation emitting head and the light sensors, the image-wise modulated light is captured by the sensors, converted by the converting means and the digitized image is stored in the internal memory buffer of the digitizer in bitmap form, or immediately transferred for further image processing and/or archival to a host computer.

The digitized image data are transmitted from the image digitizer to the host device via an interface bus. The digitizer is provided with an output port for the connection of a standardized interface bus so that the data output is in logical ACR-NEMA format, as described in ACR-NEMA Standards Publication no. 300 published by the National Electrical Manufacturers Association, 2101 L Street, N.W., Washington, DC 20037. The digitizer can also be provided with an output port for the optional connection of a 50 pole connector with physical and logical ACR-NEMA compatibility as described in the ACR/NEMA standards Publiction cited above.

The apparatus of our invention offers the substantial advantage that the radiographic films produced in a conventional way are automatically digitized, immediately following their processing in one and the same pass and without any additional and cumbersome manipulation of the films.

Optionally the apparatus of our invention may be foreseen with an easy by-pass system, if, occasionnally, some processed films need not to be digitized. In that case a flap should be foreseen just before the entrance of the scanning-digitizing part of the apparatus whereby the photographic film, after processing in the processing part of our apparatus, is lead to an intermediate exit tray. Optionally the apparatus of our invention may also be provided with an additional intermediate entrance thus permitting the digitization of previously processed films. Figure 2 represents a functional drawing of the above-described options wherein
- 21: indicates the last pair of rollers of the processing part of the apparatus of our invention,
- 22: indicates the first pair of rollers of the digitizing part of the apparatus of our invention,
- 23: indicates the optional intermediate exit tray,
- 24: indicates the optional intermediate entrance of the digitizing part of the apparatus of our invention,
- 25: indicate guide plates.

According to a further preferred mode of implementation of our invention, the digitizing part of the apparatus is provided with an additional system enabling automatic patient information identification such as an OCR (Optical Character Recognition) module.

The present way of working for patient identification when digitizing films is as follows :
After exposure of a radiographic film in a cassette, the cassette with the film is loaded in full daylight in a patient identification camera such as the camera marketed by the applicant company under the trade mark CURIX ID Camera. With it, all relevant data and time information as well as patient identification are recorded instantly on the X-ray film. For this purpose a 'window' in the cassette is foreseen through which the exposed, not yet processed film can be illuminated in the ID camera with all relevant patient data. In that way the data indentifying the patient advantageously can be stored as ASCII characters rather than pixelwise. When however such X-ray film, after being processed, is digitized when using one of the conventional off-line digitizers as described supra, such patient information is recorded by the digitizer as ordinary 'image' information not as 'character' information. As a result the patient information data should again be introduced into the digital image processing system (such as the PACS-system as aforementioned) by keyboarding same on e.g. a Personal Computer and linking said patient information to the corresponding digitized radiographic image. In practice the above described procedure of re-entering the patient information and linking same to the corresponding radiograph(s), is a duplication of efforts and also involves the risk of incorrectly linking radiographs and patient identification. Therefore according to a preferred mode of operation, the digitizer in the apparatus of our invention is provided with an OCR-system which automatically reads the patient information data on the radiograph to be digitized and links said info automatically to the digitized radiographic image. The cumbersome task of re-entering said patient information in the PACS-system becomes redundant and the risk of wrong allocation of patient information to radiographs is thereby excluded. The use of an OCR-system (Optical Character Recognition) for converting "image" information to text data has been described in EP-A-251 237.

In another embodiment of the apparatus of our invention the data identifying the patient is stored in a E²Prom which is mounted on the cassette containing the exposed X-Ray-image. The identifying data set is read out of the E²Prom and stored in the apparatus of our invention. This data set identifying the patient is then transferred tothe picture archive before or after the processed film is digitized and the image data is transferred to the picture archive.

According to a further preferred mode of operation of our invention. the apparatus is incorporated into a fully automated, full daylight photographic film center, such as the system marketed by the applicant company under the trade name CURIX CAPACITY FILM CENTER. In such center film handling and processing are integrated in one machine. Figure 3 shows a functional diagram of such center wherein
- 31: indicates the unexposed film dispenser,
- 32: indicates film magazines or cassettes of different size,
- 33: indicates the apparatus of our invention integrated into this machine, and
- 34: indicates a by-pass feeder system for exposed films.

When a cassette containing an exposed radiographic film is loaded into one of the magazines of the cassette unit (32), the cassette size is detected, the exposed film is removed from the cassette and transported to the feeder or straight to the processing module. At the same time a new sheet of unexposed film of the same type and same dimensions is loaded into the open cassette by the film dispenser.

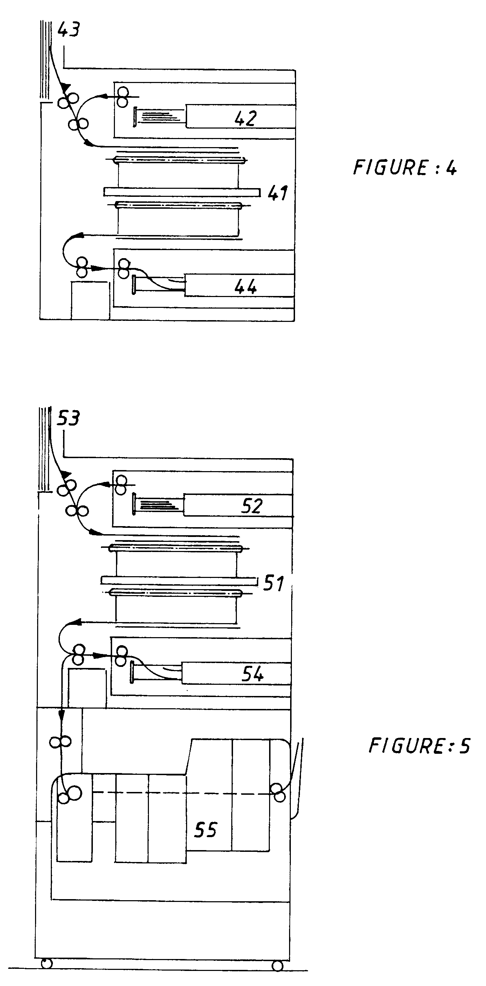

Figure 4 shows another embodiment for the application of our invention. According to this embodiment, a flat-bed scanning-digitizing module is integrated into the film handling and processing centre as described supra. After processing the radiographic film is transported by rollers to a digitizer for digitization. When the digitization has been effected, the film is lead to the output of the film handling. processing and digitization center.

According to a further preferred mode of operation of the aforesaid embodiment of our invention, the digitizer is constructed in such a way that that it either works as a digitizing apparatus, either as a printing apparatus, e.g. by modulation of the laser beam of said digitizing-printing. When the printing option is selected on the digitizing-printing apparatus a new, unexposed film sheet is taken out of the film dispenser, illuminated on the digitizer-printer, fed by rollers to the processing module of the apparatus, and further transported to the output of the entire apparatus. In figure 4, being a functional diagram of the film digitizing-printing apparatus.
- 41: indicates the digitizing-printing apparatus.
- 42: indicates the additional dispenser for unexposed films, for illumination by the digitizing-printing apparatus,
- 43: indicates an additional film feeder-buffer, and
- 44: indicates the intermediate film dispenser.

Figure 5 is a functional diagram of the film digitizing, printing and developing apparatus of our invention, wherein 51 to 54 have the same meaning as indicated by the numbers 41 to 44 in figure 4, and 55 indicates the developing apparatus.

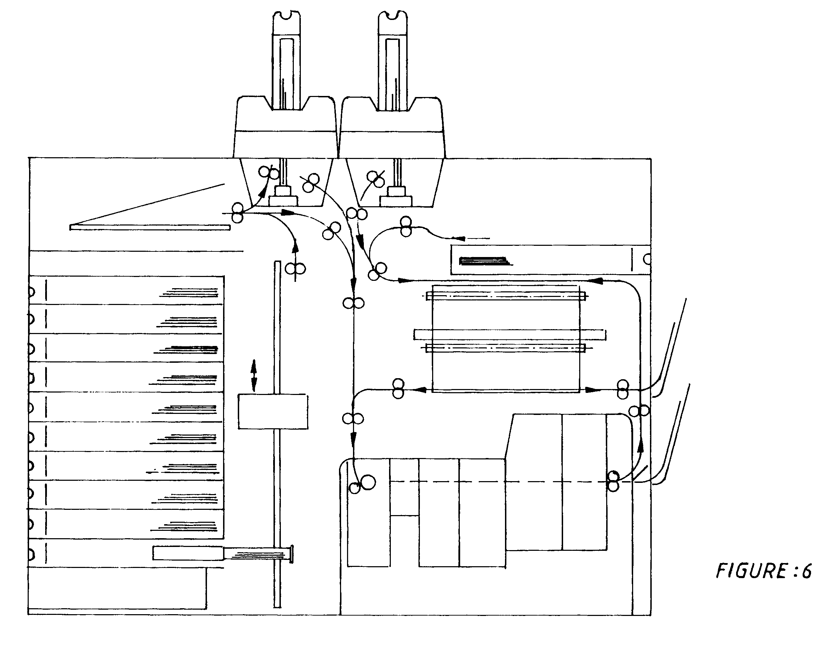

Finally figure 6 is a functional diagram of the digitizing-printing-developing apparatus of our invention, as integrated in a total film handling and processing system.

## Claims

1. An apparatus for automatically processing, scanning and digitizing an exposed X-ray film comprising
(i) an automatic processing part in which said exposed X-ray film is developed, fixed and dried to form an analogue image on said film and
(ii) a scanning/digitizing part in which said analogue image is scanned and digitized, characterised in that
said scanning/digitizing part is connected to said processing part in such a way that said processed film is fed directly from said processing part into said scanning/digitizing part.

2. An apparatus according to claim 1 wherein said scanning/digitizing part comprises a light source for linearly irradiating light onto said processed film, and a linear array of CCD-elements, said processed film passing between said light source and said array of CCD-elements.

3. An apparatus according to claim 1, wherein said scanning/digitizing part comprises a laser for irradiating said processed film.

4. An apparatus according to any of the claims 1 to 3, wherein between said automatic processing part and said scanning digitizing part a bypass is present.

5. An apparatus according to any of the preceding claims wherein said apparatus comprises further a daylight photographic film center.

6. Method for producing, scanning/digitizing and archiving radiographic images in an apparatus for the production and archival of X-ray images comprising the steps of
(i) feeding an exposed X-ray film to the automatic processing part of an apparatus comprising (i) an automatic processing part in which said exposed X-ray film is developed, fixed and dried to form an analogue image on said film and
(ii) a scanning/digitizing part in which said analogous image is scanned and digitized, characterised in that
said scanning/digitizing part is connected to said processing part in such a way that said processed film is fed directly from said processing part into said scanning/digitizing part.
(ii) scanning and digitizing the image on said processed film
(iii) transmitting the pixels of the scanned and digitized image in an electronic image archive.

7. A method according to claim 6 wherein said method further comprises the steps of
(i) illuminating the patient information data onto said X-ray film, either before, after or simultaneously with the image wise exposure of an X-ray film
(ii) scanning and digitizing said image and said patient information
(iii) transmitting the pixels of the patient information data and the pixels of the scanned and digitized image in an electronic archive.

8. A method according to claim 7 wherein said method further comprises the step of converting image information of the pixels of the digitized patient information to a character information by means of an OCR-system.

9. A method according to claim 6 wherein said method comprises further the steps of
(i) recording the patient information data in a semiconductor memory arranged on a X-Ray film cassette,
(ii) reading the patient information data in the memory of the X-Ray film cassette, together with the pixels of the scanned image into a transition memory,
(iii) transmitting the contents of the transition memory to an electronic image-archive.

10. Apparatus for the performance of any of the methods as claimed in claims 6 to 9, wherein in the apparatus comprises
(i) an entrance tray for unexposed X-Ray film and a further entrance tray for developed X-Ray films,
(ii) a device by means whereof an unexposed X-Ray film can be exposed and a developed X-Ray film can be scanned,
(iii) two exit trays for receipt of the scanned resp. printed X-Ray films, and
(iv) means for the transport of X-Ray films, by means whereof the X-Ray films are transported between the entrance and exit trays and the scanner/printer device.

11. An apparatus according to claim 10, wherein said apparatus further comprises a device for the development of exposed X-Ray films.

12. An apparatus according to claim 11, wherein said apparatus comprises further a device for the loading, resp. unloading of an X-Ray film cassette.

## Patentansprüche

1. Ein Gerät zum automatischen Verarbeiten, Abtasten und Digitalisieren eines belichteten Röntgenfilms, das folgendes umfaßt:
(i) ein automatisches Verarbeitungsteil, in dem der belichtete Röntgenfilm entwickelt, fixiert und getrocknet wird, um ein analoges Bild auf diesem Film zu formen und
(ii) ein Abtast- und Digitalisierteil, in dem das analoge Bild abgetastet und digitalisiert wird, dadurch gekennzeichnet, daß
das Abtast- und Digitalisierteil mit dem Verarbeitungsteil derart verbunden ist, daß der verarbeitete Film direkt von diesem Verarbeitungsteil zum Abtast- und Digitalisierteil zugeführt wird.

2. Ein Gerät nach Anspruch 1, dadurch gekennzeichnet, daß das Abtast- und Digitalisierteil eine Lichtquelle, die linear Licht auf den verarbeiteten Film strahlt, und eine lineare Matrix von CCD-Elementen (Charge-Coupled Device = ladunggekoppeltes Element) enthält, wobei der verarbeitete Film zwischen der Lichtquelle und der Matrix von CCD-Elementen geht.

3. Ein Gerät nach Anspruch 1, dadurch gekennzeichnet. daß das Abtast- und Digitalisierteil einen Laser enthält, um den verarbeiteten Film zu bestrahlen.

4. Ein Gerät nach irgendwelchem der Ansprüche 1 bis 3, dadurch gekennzeichnet. daß zwischen dem automatischen Verarbeitungsteil und dem Abtast- und Digitalisierteil eine Umgehungsvorrichtung enthalten ist.

5. Ein Gerät nach irgendwelchem der vorstehenden Ansprüche , dadurch gekennzeichnet, daß es weiterhin eine Tageslichtvorrichtung für fotografischen Film enthält.

6. Ein Verfahren zum Herstellen, Abtasten/Digitalisieren und Archivieren von Röntgenbildern in einem Gerät für die Herstellung und Archivierung von Röntgenbildern, welches Verfahren die folgenden Schritte umfaßt:
(i) der Zufuhr eines belichteten Röntgenfilmes zu dem automatischen Verarbeitungsteil eines Geräts, das (i) ein automatisches Verarbeitungsteil umfaßt, in dem der belichtete Röntgenfilm entwickelt, fixiert und getrocknet wird, um ein analoges Bild auf diesem Film zu formen, und
(ii) ein Abtast- und Digitalisierteil umfaßt, in dem das analoge Bild abgetastet und digitalisiert wird, dadurch gekennzeichnet, daß
das Abtast- und Digitalisierteil mit dem Verarbeitungsteil derart verbunden ist, daß der verarbeitete Film direkt vom Verarbeitungsteil zum Abtast- und Digitalisierteil zugeführt wird,
(ii) das Abtasten und Digitalisieren des Bildes auf dem verarbeiteten Film,
(iii) das Übertragen der Pixel des abgetasteten und digitalisierten Bildes in ein elektronisches Bildarchiv.

7. Ein Verfahren nach Anspruch 6, dadurch gekennzeichnet, daß es weiterhin die folgenden Schritte umfaßt:
(i) das Strahlen der Informationsdaten des Patienten auf den Röntgenfilm, entweder bevor, nachdem oder während ein Röntgenfilm bildmäßig belichtet wird,
(ii) das Abtasten und Digitalisieren des Bildes und der Patienteninformation,
(iii) das Übertragen der Pixel der Informationsdaten vom Patienten und der Pixel des abgetasteten und digitalisierten Bildes in ein elektronisches Archiv.

8. Ein Verfahren nach Anspruch 7, dadurch gekennzeichnet, daß es weiterhin den Schritt umfaßt, wobei die Bildinformation der Pixel der digitalisierten Patienteninformation mittels eines OCR-Systems in eine Zeicheninformation umgewandelt wird.

9. Ein Verfahren nach Anspruch 6, dadurch gekennzeichnet, daß es weiterhin die folgenden Schritte umfaßt:
(i) das Aufzeichnen der Informationsdaten des Patienten auf einen Halbleiterspeicher, der an einer Röntgenfilmkassette angebracht ist,
(ii) das Einlesen der Informationsdaten des Patienten im Speicher der Röntgenfilmkassette, zusammen mit den Pixeln des abgetasteten Bildes, in einen Übergangsspeicher,
(iii) das Übertragen des Inhalts des Übergangsspeichers in ein elektronisches Bildarchiv.

10. Ein Gerät für die Ausführung von irgendwelchem der in Ansprüchen 6 bis 9 beanspruchten Verfahren, dadurch gekennzeichnet, daß das Gerät folgendes enthält:
(i) eine Eingangsschale für unbelichteten Röntgenfilm und weiterhin eine Eingangsschale für belichteten Röntgenfilm,
(ii) eine Vorrichtung, mit der ein unbelichteter Röntgenfilm belichtet werden kann und ein entwickelter Röntgenfilm abgetastet werden kann,
(iii) zwei Ausgangsschalen für den Empfang der abgetasteten und gedrückten Röntgenfilme,
und
(iv) ein Mittel für den Transport von Röntgenfilmen, mit dem letztere zwischen die Eingangs- und Ausgangsschalen und die Abtast- und Drückvorrichtung transportiert werden.

11. Ein Gerät nach Anspruch 10, dadurch gekennzeichnet, daß es weiterhin eine Vorrichtung für die Entwicklung belichteter Röntgenfilme enthält.

12. Ein Gerät nach Anspruch 11, dadurch gekennzeichnet, daß es weiterhin eine Vorrichtung für das Laden und Entladen einer Röntgenfilmkassette enthält.

## Revendications

1. Un appareil pour traiter, balayer et digitaliser automatiquement un film radiographique exposé comprenant
(i) une partie de traitement automatique dans laquelle le film radiographique exposé est développé, fixé et séché afin de former une image analogue sur ce film et
(ii) une partie de balayage et de digitalisation dans laquelle cette image analogue est balayée et digitalisée, caractérisé en ce que
cette partie de balayage et de digitalisation est connectée à la partie de traitement de façon à ce que le film traité soit directement amené de la partie de traitement dans la partie de balayage et de digitalisation,

2. Un appareil selon la revendication 1, caractérisé en ce que cette partie de balayage et de digitalisation comprend une source lumineuse pour irradier de manière linéaire de la lumière sur le film traité, et une matrice linéaire d'éléments CCD (Charge-Coupled Device = élément couplé par charge), le film traité passant entre cette source lumineuse et cette matrice d'éléments CCD.

3. Un appareil selon la revendication 1, caractérisé en ce que cette partie de balayage et de digitalisation comprend un laser pour irradier le film traité.

4. Un appareil selon l'une quelconque des revendications 1 à 3, caractérisé en ce qu'un dispositif de dérivation est présente entre la partie de traitement automatique et la partie de balayage et de digitalisation .

5. Un appareil selon l'une quelconque des revendications précédentes, caractérisé en ce qu'il comprend en plus un centre lumière du jour pour film photographique.

6. Une méthode pour produire, balayer/digitaliser et archiver des images radiographiques dans un appareil pour la production et l'archivage d'images radiographiques comprenant les phases
(i) de l'amenée d'un film radiographique exposé à la partie de traitement automatique d'un appareil comprenant (i) une partie de traitement automatique dans laquelle le film radiographique exposé est développé, fixé et séché afin de former une image analogue sur ce film et
(ii) une partie de balayage et de digitalisation dans laquelle l'image analogue est balayée et digitalisée, caractérisée en ce que
cette partie de balayage et de digitalisation est connectée à la partie de traitement de façon à ce que le film traité soit directement amené de la partie de traitement dans la partie de balayage et de digitalisation,
(ii) du balayage et de la digitalisation de l'image sur le film traité,
(iii) de la transmission des pixels de l'image balayée et digitalisée vers une archive d'images électronique.

7. Une méthode selon la revendication 6, caractérisée en ce qu'elle comprend en plus les phases
(i) de l'illumination des données d'information du patient sur le film radiographique, que ce soit avant, après ou pendant l'exposition sous forme d'image d'un film radiographique,
(ii) du balayage et de la digitalisation de l'image et de l'information du patient,
(iii) de la transmission des pixels des données d'information du patient et des pixels de l'image balayée et digitalisée dans une archive électronique.

8. Une méthode selon la revendication 7, caractérisée en ce qu'elle comprend en plus une phase de conversion de l'information sous forme d'image des pixels de l'information digitalisée du patient en une information sous forme de caractères au moyen d'un système ROC (Reconnaissance Optique de Caractères).

9. Une méthode selon la revendication 6, caractérisée en ce qu'elle comprend en plus les phases
(i) de l'enregistrement des données d'information du patient dans une mémoire semi-conductrice aménagée sur une cassette de film radiographique,
(ii) de la lecture des données d'information du patient situées dans la mémoire de la cassette de film radiographique, ensemble avec les pixels de l'image balayée, dans une mémoire de transition,
(iii) de la transmission du contenu de la mémoire de transition vers une archive d'images électronique.

10. Un appareil pour l'exécution de l'une quelconque des méthodes revendiquées dans les revendications 6 à 9, caractérisé en ce qu'il comprend
(i) un plateau d'entrée pour du film radiographique non exposé et en plus un plateau d'entrée pour des films radiographiques développés,
(ii) un dispositif au moyen duquel un film radiographique non exposé peut être exposé et un film radiographique développé peut être balayé,
(iii) deux plateaux de sortie pour recevoir respectivement les films radiographiques balayés et les films radiographiques imprimés,
et
(iv) un moyen pour le transport de films radiographiques, au moyen duquel les films radiographiques sont transportés entre les plateaux d'entrée et de sortie et le dispositif de balayage et d'impression.

11. Un appareil selon la revendication 10, caractérisé en ce qu'il comprend en plus un dispositif pour le développement de films radiographiques exposés.

12. Un appareil selon la revendication 11, caractérisé en ce qu'il comprend en plus un dispositif pour charger et décharger une cassette de film radiographique.
